# FASCICULE DE BREVET EUROPEEN

(11) **EP 3 119 060 B1**
(45) Date de publication et mention de la délivrance du brevet: **05.12.2018**
(21) Numéro de dépôt: 16177417.9
(22) Date de dépôt: 01.07.2016
(51) Int. Cl.: H04L 29/08, H04L 12/18, H04L 29/06

(54) **PROCÉDÉ ET DISPOSITIF D'ÉTABLISSEMENT DE COMMUNICATIONS WEBRTC**
VERFAHREN UND VORRICHTUNG ZUR ERSTELLUNG VON WEBRTC-KOMMUNIKATIONEN
METHOD AND DEVICE FOR ESTABLISHING WEBRTC COMMUNICATIONS

(30) Priorité: 17.07.2015 FR 1556780
(43) Date de publication de la demande: 18.01.2017
(73) Titulaire: Orange, 75015 Paris (FR)
(72) Inventeur: TOUTAIN, François, 22300 LANNION (FR); LE HUEROU, Emmanuel, 22700 SAINT QUAY PERROS (FR)

(56) Documents cités:
- EP-A1- 2 770 667
- "FAQ - appear.in - one click video conversations", , 16 juillet 2015 (2015-07-16), XP055270252, Extrait de l'Internet: URL:https://appear.in/information/faq/ [extrait le 2016-05-03]
- "WebRTC 1.0: Real-time Communication Between Browsers - Working Draft 10 February 2015", , 10 février 2015 (2015-02-10), XP055270239, Extrait de l'Internet: URL:https://www.w3.org/TR/2015/WD-webrtc-2 0150210/ [extrait le 2016-05-03]
- SALVATORE LORETO ET AL: "Real-Time Communications in the Web: Issues, Achievements, and Ongoing Standardization Efforts", IEEE INTERNET COMPUTING, IEEE SERVICE CENTER, NEW YORK, NY.- INSTITUTE OF ELECTRICAL AND ELECTRONICS ENGINEERS, US, vol. 16, no. 5, 1 septembre 2012 (2012-09-01), pages 68-73, XP011466375, ISSN: 1089-7801, DOI: 10.1109/MIC.2012.115

## Description

L'invention concerne l'établissement de communications en temps réel entre navigateurs web sur un réseau de communication tel que l'Internet.

Plus précisément, l'invention concerne la technologie de communication en temps réel entre navigateurs web actuellement en cours de normalisation, conjointement par le *World Wide Web Consortium* (W3C) et l'*Internet Engineering Task Force* (IETF), et désignée par WebRTC (*Web Real-Time Communication*) au W3C et RTCWEB à l'IETF.

Il existe des applications de communication permettant à des utilisateurs de communiquer en temps réel via un réseau de communication tel que l'Internet. De telles applications nécessitent que chaque utilisateur souhaitant participer à une communication temps réel ait installé sur son terminal l'application de communication et qu'un tel utilisateur dispose d'un compte lui permettant de s'identifier auprès du fournisseur de service proposant l'application de communication. Certaines de ces applications de communication peuvent être intégrées à un navigateur web mais elles sont installées séparément du navigateur web. Par exemple, de telles applications de communication sont connues sous le nom de Skype™, Facebook™,GoogleTalk™, etc...

Tous les produits précités nécessitent des téléchargements, des applications natives ou des modules d'extension (plugins) externes au navigateur. Or, le téléchargement, l'installation et la mise à jour de plugins est complexe, source d'erreurs et de désagrément. Par ailleurs, la conception, le test, la mise à jour, et le déploiement de plugins est complexe et coûteux.

Avec le développement du langage HTML5 (*HyperText Markup Language 5*) de nouvelles perspectives s'ouvrent aux développeurs d'applications avec la possibilité de rendre les interfaces (API - *Application Programming Interface*) avec les applications web, accessibles de façon normalisée au sein du navigateur.

C'est la voie suivie par l'IETF et le W3C avec la norme RTCWEB/ WebRTC qui vise à fournir deux types de spécifications :
- une spécification de protocoles, effectuée à l'IETF ;
- une spécification d'APIs Javascript, effectuée au W3C.

Les deux spécifications précitées visent à fournir un environnement selon lequel une application Javascript incorporée dans n'importe quelle page web, lue par n'importe quel navigateur compatible, et autorisée de manière appropriée par son utilisateur, est capable d'établir une communication utilisant de l'audio, de la vidéo (et des données auxiliaires), sans que la plateforme du navigateur ne limite les types d'application dans lesquels cette fonctionnalité de communication peut être utilisée.

Selon la norme RTCWEB/WebRTC actuelle, un navigateur web doit implémenter trois interfaces API pour pouvoir recevoir et transmettre des données en mode streaming (parfois appelé "lecture en continu" ou "diffusion en flux" en français), ces APIs sont les suivantes :
- MediaStream : permet au navigateur d'accéder aux flux de données tels que ceux issus de la caméra (web cam) et du microphone du terminal de l'utilisateur ;
- RTCPeerConnection : assure les appels audio ou vidéo, avec des mécanismes de chiffrement et de gestion de bande passante (*bandwidth*) ;
- RTCDataChannel : assure la communication pair-à-pair de données génériques.

Pour obtenir plus d'informations concernant les spécifications RTCWEB/ WebRTC, on pourra consulter en particulier les documents suivants :
- WebRTC 1.0: Real-time Communication Between Browsers - W3C Editor's Draft 22 March 2013 - accessible sur Internet à l'adresse suivante :
   http://dev.w3.org/2011/webrtc/editor/webrtc.html#rtcpeerconnection-interface
- Overview: Real Time Protocols for Browser-based Applications - draft-ietf-rtcweb-overview-06 - February 20, 2013 - accessible sur Internet à l'adresse suivante :
   http://datatracker.ietf.org/doc/draft-ietf-rtcweb-overview/

Actuellement, des éditeurs de navigateur web proposent des versions expérimentales de ce nouveau service entre navigateurs, par exemple Google avec le navigateur Chrome™, Mozilla avec le navigateur Firefox™, Ericsson avec le navigateur appelé Bowser™ développé pour téléphone mobile.

Dans les versions proposées à ce jour, qui sont conformes aux spécifications RTCWEB/ WebRTC, lorsqu'un premier utilisateur souhaite établir une communication audio ou vidéo, depuis son navigateur web compatible WebRTC, avec un second utilisateur sur le réseau Internet, il commence par se connecter via son navigateur à un serveur d'application fournissant le service de communication WebRTC. Après une opération d'authentification éventuelle, le navigateur charge, via une page web, l'application web (application Javascript) conforme aux spécifications RTCWEB et adaptée à interagir avec les APIs susmentionnées (conformes aux spécifications WebRTC) qui sont incorporées nativement dans le navigateur.

Ensuite, le premier utilisateur choisit, via la page web de connexion au serveur d'application, un identifiant du second utilisateur, puis entre une commande - par exemple par un clic sur un bouton d'action affiché dans la page web ouverte dans le navigateur - pour déclencher l'appel audio ou vidéo vers le second utilisateur. Typiquement, la page web ouverte dans le navigateur affiche alors un message indiquant que la connexion est en cours d'établissement.

Si le second utilisateur, destinataire de l'appel, est également connecté au même service de communication WebRTC fourni par le serveur d'application, alors il pourra accepter l'appel audio ou vidéo issu du premier utilisateur, et la communication pourra alors être établie.

Il apparait ainsi que pour qu'une communication WebRTC soit établie entre deux utilisateurs, les deux utilisateurs doivent être connectés au serveur d'application. Afin de ne pas rater une demande de communication, le terminal de l'utilisateur appelé doit alors exécuter en permanence un navigateur web utilisant ainsi des ressources, et notamment la batterie, du terminal. Ceci peut être problématique dans le cas de terminaux mobiles.

De plus, l'utilisateur appelé doit pouvoir être identifié par le serveur d'application pour recevoir une demande de communication en provenance de l'utilisateur appelant. L'utilisateur appelé doit donc disposer d'un compte auprès du fournisseur du serveur d'application. Pour demander une communication vers l'utilisateur appelé, l'utilisateur appelant doit également savoir auprès de quel fournisseur l'utilisateur du terminal appelé peut être joint.

Un service de communication en temps réel WebRTC est proposé sur le site Internet https://appear.in. Ce service de communication permet à un utilisateur souhaitant établir une communication vidéo WebRTC d'obtenir une URL pointant vers une conversation vidéo pouvant comporter au plus 8 utilisateurs connectés à la conversation. L'utilisateur peut ensuite copier l'URL obtenue dans un message et l'envoyer aux utilisateurs avec lesquels il souhaite communiquer. Lorsque les autres utilisateurs accèdent à la page web vers laquelle l'URL pointe, ils sont mis en communication avec l'utilisateur via la conversation vidéo. Un tel service nécessite que l'utilisateur aille visiter le site Internet du service lorsqu'il souhaite établir une communication avec d'autres utilisateurs, crée un salon de conversation pour obtenir l'URL, copie l'URL dans un message et renseigne les destinataires du message auxquels il souhaite l'envoyer. Toutes ces étapes sont fastidieuses pour l'utilisateur, surtout si celui-ci souhaite communiquer à partir d'un terminal mobile.

Un des buts de l'invention est d'améliorer l'état de la technique.

L'invention concerne un procédé pour établir une communication dite communication web entre un navigateur web exécuté sur un premier terminal et un navigateur web exécuté sur un deuxième terminal, comprenant une étape de détection par le premier terminal d'une interaction utilisateur demandant l'établissement d'une communication avec le deuxième terminal, une communication selon un mode de communication distinct d'une communication via un navigateur web étant préalablement établie entre le premier terminal et le deuxième terminal, la détection de l'interaction utilisateur déclenchant :
- une étape de création d'un identifiant de session comprenant au moins un identifiant du premier terminal,
- une étape de génération d'une adresse URL comprenant ledit identifiant de session créé, ladite adresse URL permettant d'établir une session de communication via un serveur,
- une étape d'insertion de ladite adresse URL dans un message destiné au deuxième terminal,
- une étape d'envoi du message à destination du deuxième terminal déclenchant l'ouverture par le navigateur du premier terminal d'une page web téléchargée depuis le serveur grâce à ladite adresse URL.

L'invention s'applique à tout type de communication pouvant être établies entre deux navigateurs web et en particulier aux sessions de communication selon la technologie WebRTC.

Ainsi, grâce à l'invention, l'établissement d'une session de communication selon la technologie WebRTC est facilité pour un utilisateur d'un terminal. Le procédé selon l'invention permet d'obtenir un identifiant de session unique construit notamment à partir d'un identifiant du premier terminal. Cet identifiant de session unique permet à un serveur fournissant un service de communication WebRTC d'identifier une page web via laquelle la communication WebRTC demandée est établie.

L'envoi du message par le premier terminal au deuxième terminal déclenche l'ouverture de la page web par le navigateur du premier terminal. L'utilisateur du premier terminal n'a ainsi pas besoin d'aller sur un site Internet offrant un service de communication WebRTC. De plus, le deuxième terminal est informé de la demande de communication via la réception d'un message comportant un lien vers la communication WebRTC. L'utilisateur du deuxième terminal n'a plus qu'à cliquer sur le lien compris dans le message pour participer à la communication WebRTC. Ainsi, le deuxième terminal n'a pas besoin d'avoir un navigateur web exécuté en permanence sur le deuxième terminal pour recevoir une demande de communication WebRTC.

Le procédé permet ainsi de basculer facilement d'un mode de communication par exemple asynchrone, de type SMS, à un mode de communication web de type WebRTC. Les différents modes ou caractéristiques de réalisation mentionnés ci-après peuvent être ajoutés indépendamment ou en combinaison les uns avec les autres, aux étapes du procédé défini ci-dessus.

Selon un mode particulier de réalisation de l'invention, la communication préalablement établie entre le premier terminal et le deuxième terminal selon un mode de communication distinct d'une communication web est une communication par messages textuels mise en oeuvre par une application de communication par messages textuels.

Ainsi, l'utilisateur du premier terminal dialoguant par messages textuels avec l'utilisateur du deuxième terminal, peut demander un basculement vers un autre mode de communication par l'envoi d'un message comportant l'adresse URL appropriée et via ce même mode de communication par messages textuels.

L'utilisateur du premier terminal peut demander l'établissement d'une communication en WebRTC avec un deuxième terminal simplement, par exemple en activant un bouton d'appel depuis une application exécutée par le premier terminal, en dehors du navigateur web du premier terminal. Par exemple, une telle application peut être une application de messages SMS ou de messages instantanés, ou un journal d'appels ou encore un répertoire des contacts du premier terminal. De telles applications sont alors interfacées avec un module logiciel apte à mettre en oeuvre le procédé selon l'invention. Les interfaces de ces applications sont munies d'un nouveau bouton d'appel destiné à l'établissement de communication selon la technologie WebRTC.

Selon un autre mode particulier de réalisation de l'invention, le bouton d'action est affiché en association avec une information relative à la communication préalablement établie entre le premier terminal et le deuxième terminal selon un mode de communication distinct de la technologie WebRTC.

Il peut également être affiché en association avec une information de contact relative au deuxième terminal.

Selon ce mode particulier de réalisation, l'utilisateur du premier terminal peut sélectionner facilement un contact avec lequel il souhaite établir une communication WebRTC à partir d'un message ou d'un appel préalablement échangé avec ce contact, ou bien à partir de son répertoire.

Le premier terminal obtient un identifiant du deuxième terminal sans que l'utilisateur du premier terminal n'ait besoin de le renseigner.

Selon un autre mode particulier de réalisation de l'invention, le message comprenant l'adresse URL est affiché dans un cadre de composition de texte d'une interface graphique de l'application de communication par messages textuels.

L'utilisateur du premier terminal peut ainsi modifier le message comprenant l'adresse URL avant de l'envoyer au deuxième terminal, par exemple pour insérer un message personnel destiné à l'utilisateur du deuxième terminal.

Selon un autre mode particulier de réalisation de l'invention, après l'envoi du message comprenant l'adresse URL, ledit message est sauvegardé par le premier terminal avec les messages échangés entre le premier terminal et le deuxième terminal via l'application de communication par messages textuels.

L'utilisateur du premier terminal peut ainsi avoir accès ultérieurement à la communication WebRTC établie, en cliquant sur le lien. Par exemple, le serveur peut alors afficher une page web comprenant des informations relatives à la communication (date, heure, informations sur le deuxième terminal, transcription de la conversation, enregistrement audio/vidéo de la communication...).

Selon un autre mode particulier de réalisation de l'invention, l'envoi du message déclenche, préalablement à l'ouverture de la page web, l'exécution d'une occurrence du navigateur web du premier terminal.

L'utilisateur du premier terminal peut ainsi déclencher des communications WebRTC sans nécessiter d'interactions via son navigateur web. Pour établir une communication WebRTC, le navigateur web du premier terminal n'est exécuté que lorsque cela est nécessaire, sur demande de l'utilisateur du terminal. Les ressources du premier terminal sont ainsi préservées.

Selon un autre mode particulier de réalisation de l'invention, après un temps prédéterminé depuis l'envoi du message et lorsque la communication web n'est pas établie avec le deuxième terminal, une notification d'expiration de session envoyée par le serveur est reçue par le premier terminal.

Lorsque l'utilisateur du deuxième terminal ne souhaite pas établir la communication web ou lorsqu'il n'a pas vu le message comprenant l'URL, l'utilisateur du premier terminal est informé après un temps prédéterminé, par exemple 1 minute, que la session de communication a expiré. Il peut alors choisir un autre moyen de communication avec le deuxième terminal.

Selon un autre mode particulier de réalisation de l'invention, le procédé comprend en outre une étape de réception par le premier terminal d'une page web envoyée par le serveur, ladite page web indiquant que le deuxième terminal n'a pas pu établir la communication web demandée.

Ainsi, l'utilisateur du premier terminal est informé que la communication WebRTC n'est pas possible, par exemple parce que le navigateur du deuxième terminal n'est pas compatible WebRTC.

L'invention concerne également un dispositif pour établir une communication dite communication web entre un navigateur web exécuté sur un premier terminal et un navigateur web exécuté sur un deuxième terminal, une communication selon un mode de communication distinct d'une communication via un navigateur web étant préalablement établie entre le premier terminal et le deuxième terminal, comprenant :
- un module de détection d'une interaction utilisateur demandant l'établissement d'une communication web avec le deuxième terminal,
- un module de création d'un identifiant de session comprenant au moins ledit identifiant du premier terminal,
- un module de génération d'une adresse URL comprenant ledit identifiant de session créé, ladite adresse URL permettant d'établir une session de communication web via un serveur,
- un module d'insertion de ladite adresse URL dans un message destiné au deuxième terminal,
- un module d'envoi du message à destination du deuxième terminal, adapté à déclencher par le navigateur web du premier terminal l'ouverture d'une page web téléchargée depuis le serveur à partir de ladite adresse URL.

L'invention concerne aussi un terminal comprenant un dispositif tel que décrit précédemment.

Dans un mode particulier de réalisation de l'invention, les différentes étapes du procédé sont mises en oeuvre par des instructions de programmes d'ordinateurs.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes du procédé qui vient d'être décrit.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les avantages du terminal, du dispositif et du programme d'ordinateur comportant des instructions adaptées à la mise en oeuvre des différentes étapes du procédé sont identiques à ceux présentés en relation avec le procédé selon l'un quelconque des modes particuliers de réalisation mentionnés ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en oeuvre de l'invention selon un mode particulier de réalisation de l'invention,
- la figure 2 illustre schématiquement des étapes du procédé pour établir une communication selon la technologie WebRTC selon un mode particulier de réalisation de l'invention,
- les figures 3A à 3E illustrent des interfaces graphiques d'un terminal apte à mettre en oeuvre le procédé d'établissement d'une communication WebRTC selon un mode particulier de réalisation de l'invention,
- la figure 4 illustre un dispositif adapté pour mettre en oeuvre le procédé d'établissement d'une communication WebRTC selon un mode particulier de réalisation de l'invention.

### Description d'un mode particulier de réalisation de l'invention

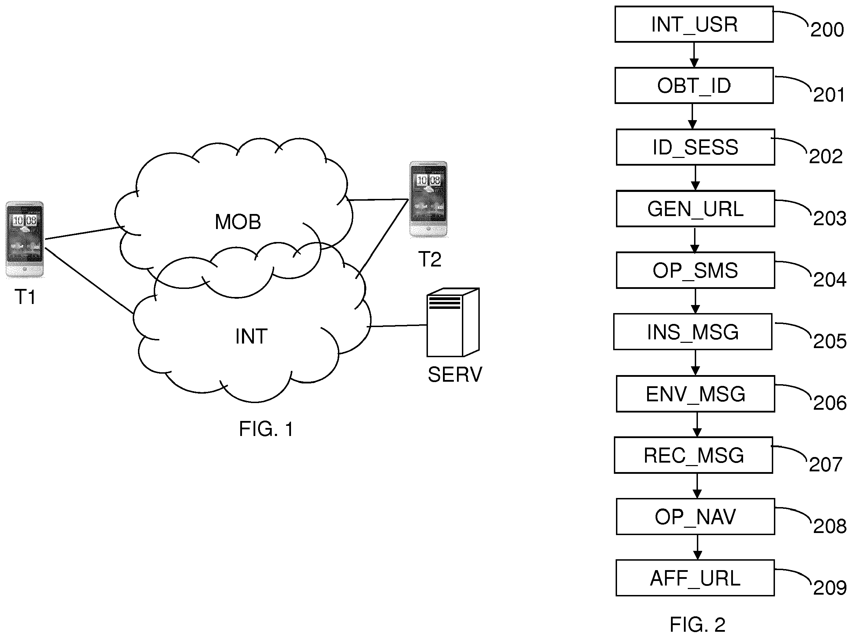

La figure 1 comprend un premier terminal T1 et un deuxième terminal T2. Les terminaux T1 et T2 sont par exemple des terminaux mobiles aptes à émettre et recevoir des communications téléphoniques et/ou visiophoniques via un réseau de communication mobile MOB, tel qu'un réseau de communication cellulaire 2G/3G ou 4G.

Les terminaux T1 et T2 sont également aptes à se connecter à un réseau de données INT, tel que l'Internet. Pour cela, les terminaux T1 et T2 disposent d'un navigateur web installé sur chaque terminal.

Le navigateur web NAV du terminal T1 est compatible avec la norme WebRTC/RCTWEB. Le navigateur web du terminal T1 est adapté pour établir des communications selon la technologie WebRTC avec d'autres terminaux via le réseau INT. De telles communications sont par exemple établies grâce à un service de communication WebRTC fourni par un serveur SERV connecté au réseau INT.

Le terminal T1 dispose également d'applications de communication, telles qu'une application de communication par messages texte SMS, une application de messagerie instantanée, une application de communication téléphonique et/ou visiophonique, une application de répertoire, etc... De telles applications sont des applications exécutées par le terminal T1 en dehors du navigateur web du terminal T1.

Selon un mode particulier de réalisation de l'invention, des étapes du procédé selon l'invention sont mises en oeuvre par un module logiciel LOGI installé sur le terminal T1 et qui s'interface avec au moins une de ces applications sur le terminal T1.

Le module logiciel LOGI peut avoir été installé sur le terminal T1 simultanément à l'installation de l'application avec laquelle il s'interface. De manière alternative, le module logiciel peut aussi avoir été téléchargé et installé ultérieurement à l'installation de cette application.

La figure 2 illustre des étapes du procédé pour établir une communication entre un navigateur web du terminal T1 et un navigateur web du terminal T2, par exemple selon la technologie WebRTC, selon un mode particulier de réalisation de l'invention. Le procédé est par exemple mis en oeuvre par le terminal T1 de la figure 1. Lors d'une étape 200, le terminal T1 détecte, via son module d'interaction utilisateur, une interaction utilisateur demandant l'établissement d'une communication selon la technologie WebRTC avec un contact C1. Par exemple, le contact C1 est un utilisateur du terminal T2 illustré à la figure 1.

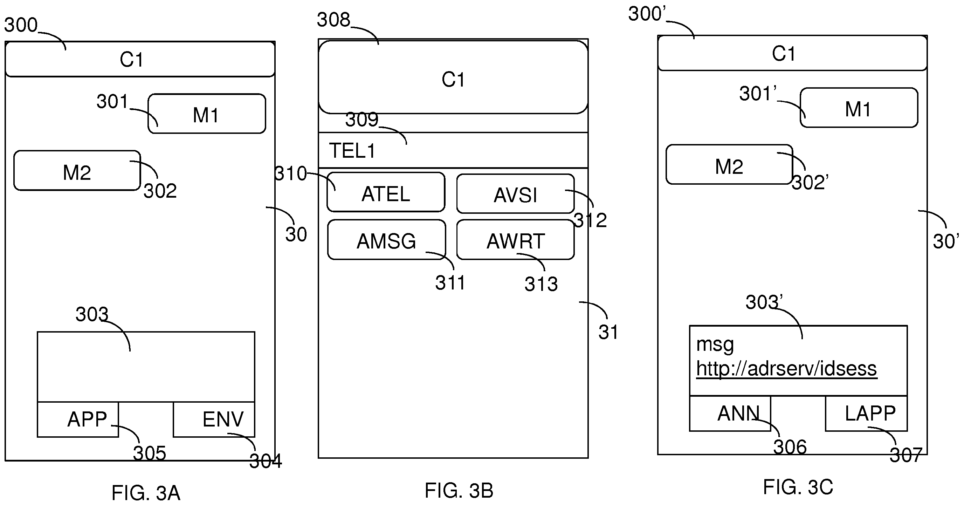

Par exemple, lors de l'étape 200, l'interaction utilisateur est détectée à partir d'une interface graphique d'une application de communication par messages texte, telle qu'une application de SMS ou de messagerie instantanée. Un exemple d'une interface graphique d'une telle application est représenté par la figure 3A.

L'interface graphique de la figure 3A comprend une zone d'affichage 30 comprenant un cadre 300 dans lequel le nom d'un contact C1 du terminal T1 est indiqué. La zone d'affichage 30 comprend également un ensemble de messages texte 301, 302 échangés préalablement entre le terminal T1 et le contact C1 : le message 301 est un message texte envoyé par le terminal T1 au contact C1, le message 302 est un message texte reçu par le terminal T1 en provenance du contact C1. La zone d'affichage 30 comprend également un champ 303 de composition de message texte permettant à un utilisateur du terminal T1 de composer un message destiné au contact C1. Le champ de composition 303 est associé à premier bouton d'action 304 permettant via une interaction utilisateur sur ce bouton à l'utilisateur du terminal T1 d'envoyer au contact C1 un message composé dans le champ de composition 303.

Ainsi, une communication selon un mode de communication distinct d'une communication via un navigateur web est préalablement établie entre le premier terminal T1 et le deuxième terminal T2 par une application de communication par messages textuels.

Selon l'invention, le champ de composition 303 est également associé à un bouton d'action 305 permettant via une interaction utilisateur sur un tel bouton 305 à un utilisateur du terminal T1 d'envoyer au contact C1 une demande d'établissement d'une communication selon la technologie WebRTC.

Selon un mode particulier de réalisation de l'invention, lors de l'étape 200, l'utilisateur du terminal T1 interagit sur le bouton d'action 305.

Selon un autre exemple illustré par la figure 3B, lors de l'étape 200, l'interaction utilisateur est détectée à partir d'une interface graphique d'une application de répertoire du terminal T1. La figure 3B illustre une fiche contact du terminal T1 correspondant au contact C1. La figure 3B comprend une zone d'affichage 31 comprenant notamment:
- un cadre 308 indiquant le nom C1 du contact,
- une information de contact 309 du contact C1, par exemple un numéro de téléphone TEL1 du contact C1,
- des boutons d'action 310, 311, 312 permettant à l'utilisateur du terminal T1 d'envoyer au contact C1 via le réseau de communication MOB respectivement une demande de communication téléphonique, ou une demande de communication visiophonique, ou un message texte.

Selon l'invention, la zone d'affichage 31 comprend également un bouton d'action 313 permettant à l'utilisateur du terminal T1 d'envoyer au contact C1 une demande d'établissement d'une communication selon la technologie WebRTC.

Selon cet exemple, lors de l'étape 200, l'utilisateur du terminal T1 interagit sur le bouton d'action 313.

D'autres exemples d'interfaces graphiques et d'application exécutée par le terminal T1 disposant d'un bouton d'action tel que le bouton d'action 305 ou 313 sont possibles.

La détection de l'interaction utilisateur déclenche lors d'une étape 201 l'obtention par le terminal T1 d'un identifiant IDT1 du terminal T1. Un tel identifiant IDT1 peut être un identifiant compris dans la carte SIM du terminal T1 ou un numéro de téléphone du terminal T1 ou encore un identifiant du terminal T1 dédié au service de communication selon la technologie WebRTC et fourni par le serveur SERV.

Lors d'une étape 202, le terminal T1 crée un identifiant de session IDSESS comprenant au moins l'identifiant du terminal T1 obtenu lors de l'étape 201. Un tel identifiant IDSESS est unique pour le serveur SERV et permet au serveur SERV d'identifier la session de communication WebRTC initiée par le terminal T1. Selon un mode particulier de réalisation de l'invention, l'identifiant de session IDSESS correspond à l'identifiant du terminal T1 IDT1 auquel est concaténé un numéro de session NUM. Un tel numéro de session a été initialisé à la valeur 0 lorsque le terminal T1 a installé le module logiciel LOGI. Puis, le numéro de session est incrémenté de 1 à chaque nouvelle session de communication WebRTC initiée par le terminal T1.

Selon un autre mode particulier de réalisation de l'invention, l'identifiant de session IDSESS correspond à l'identifiant du terminal T1 IDT1 auquel est concaténé un horodatage correspondant à l'instant où l'utilisateur du terminal T1 a initié la session de communication. Un tel horodatage comprend l'année, le mois, le jour, l'heure, la minute et éventuellement la seconde de l'instant auquel l'utilisateur du terminal T1 a initié la session de communication.

Selon un autre mode particulier de réalisation de l'invention, l'identifiant de session IDSESS correspond à l'identifiant du terminal T1 IDT1 auquel est concaténé un identifiant du contact C1 ou du terminal T2 ; et soit un numéro de session ou un horodatage de l'instant d'initiation de la session de communication.

D'autres modes particuliers de réalisation de l'invention sont possibles pour assurer l'unicité de l'identifiant de session IDSESS.

Lors d'une étape 203, le terminal T1 génère une adresse URL comprenant l'identifiant de session IDSESS créé. Une telle adresse URL est générée à partir d'une adresse du serveur SERV qui a préalablement été configurée au sein du terminal T1. L'adresse URL générée a la forme suivante : http://adrserv/idsess où adrserv correspond à l'adresse du serveur SERV et idsess correspond à l'identifiant IDSESS de session créé à l'étape 202.

Selon un mode particulier de réalisation de l'invention, lorsque l'application de communication via laquelle l'utilisateur du terminal T1 initie la demande de communication avec le terminal T2 selon la technologie WebRTC, est différente d'une application de message texte, lors d'une étape 204, le terminal T1 ouvre une application de message texte. Par exemple, une telle application est une application de messages SMS.

La figure 3C illustre une interface graphique d'une telle application. L'interface graphique de la figure 3C comprend une zone d'affichage 30' comprenant un cadre 300' dans lequel le nom du contact C1 du terminal T1 est indiqué. La zone d'affichage 30' comprend également un ensemble de messages texte 301', 302' échangés préalablement entre le terminal T1 et le contact C1. La zone d'affichage 30' comprend également un champ 303' de composition de message texte permettant à un utilisateur du terminal T1 de composer un message destiné au contact C1.

Le champ de composition 303' est associé à un bouton d'action 306' permettant via une interaction utilisateur sur ce bouton à l'utilisateur du terminal T1 d'annuler la rédaction du message en cours de composition dans le champ de composition 303'.

Le champ de composition 303' est également associé à un bouton d'action 307' permettant via une interaction utilisateur sur un tel bouton 307' à un utilisateur du terminal T1 d'envoyer au contact C1 le message composé dans le champ de composition 303'.

Selon l'invention, lors d'une étape 205, le terminal T1 insère dans le champ de composition 303' un message msg et l'URL générée. Le résultat de l'étape 205 est illustré par la figure 3C. Le message « msg » peut par exemple être de la forme : « Votre correspondant souhaite établir une communication, pour accepter cliquer sur le lien suivant : ».

Le message compris dans le champ de composition 303' peut être édité et modifié par l'utilisateur. L'utilisateur peut ainsi modifier le message « msg » afin de le personnaliser. Par exemple, l'utilisateur du terminal T1 peut effacer le message « msg » et insérer un autre message de la forme « On s'appelle ? ».

L'adresse URL insérée dans le champ de composition 303' ne peut cependant pas être modifiée. Ainsi, l'adresse URL permettant au terminal T1 et au terminal T2 d'accéder à la session de communication reste intègre. Les erreurs liées à l'accès à la session de communication sont ainsi évitées.

Lors d'une étape 206, lorsque l'utilisateur du terminal T1 interagit sur le bouton d'action 307 illustré à la figure 3C, le terminal T1 envoie au terminal T2 le message inséré dans le champ de composition 303' et comprenant l'adresse URL générée. Par exemple, l'envoi d'un tel message est mis en oeuvre de manière connue selon un protocole d'envoi de messages SMS via le réseau MOB. Le champ destinataire du message est rempli automatiquement avec un identifiant du contact C1 ou du terminal T2. Un tel identifiant est obtenu par l'application de messages texte à partir d'un espace mémoire du terminal T1 stockant les informations de contact relatives au contact C1.

Suite à la réception par le terminal T2 d'un tel message, lorsque l'utilisateur du terminal T2 clique sur l'adresse URL comprise dans le message reçu, le navigateur web du terminal T2 s'active et envoie une requête d'accès à la page web correspondant à l'adresse URL. La requête d'accès est transmise par le réseau INT au serveur SERV.

Selon un mode particulier de réalisation de l'invention, lors d'une étape 207, le message envoyé à l'étape 206 est enregistré par le terminal T1 avec les messages 301' et 302' préalablement échangés entre le terminal T1 et le contact C1 via l'application de messages textuels.

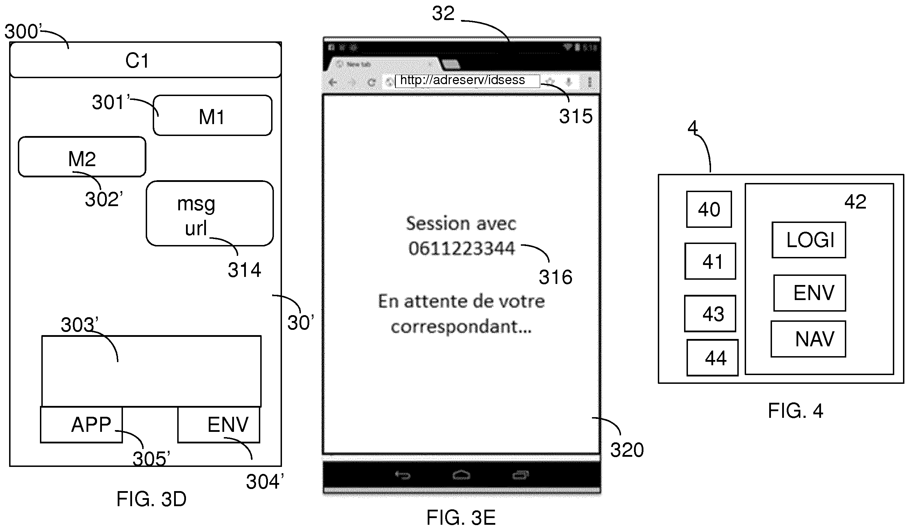

Le résultat de l'étape 207 est illustré par la figure 3D. L'interface graphique illustrée en figure 3D est similaire à celle illustrée en figure 3C. Dans la figure 3D, le champ de composition 303' est maintenant vide puisque le message préalablement en cours de composition a été envoyé au terminal T2 et qu'aucun nouveau message n'est en cours de composition. Les boutons d'action 306 et 307 de la figure 3C ont été remplacés dans la figure 3D par les boutons d'action 304' et 305'. Les boutons d'action 304' et 305' sont identiques aux boutons d'action 304 et 305 respectivement présentés en relation avec la figure 3A. Selon le mode particulier de réalisation de l'invention décrit ici, l'interface graphique illustrée en figure 3D montre le message 314 envoyé par le terminal T1 sauvegardé avec les messages 301' et 302' préalablement échangés entre le terminal T1 et le terminal T2.

Suite à l'envoi du message au terminal T2 au cours de l'étape 206, selon un mode particulier de réalisation de l'invention, lors d'une étape 208, lorsque le navigateur web n'est pas activé sur le terminal T1, le terminal T1 exécute une occurrence de son navigateur web.

Lors d'une étape 209, le terminal T1 ouvre via son navigateur web une page web du service WebRTC fourni par le serveur SERV. Une telle page web correspond à la page web pointée par l'adresse URL générée. Le terminal T1 communique ensuite avec le serveur SERV pour demander au serveur SERV l'établissement d'une demande de communication destinée au terminal T2. Une telle demande de communication est par exemple transmise au serveur SERV via l'API RTCPeerConnection du navigateur web. Sur réception de la demande de communication en provenance du terminal T1, le serveur SERV se met en attente de la réception d'une demande d'accès à l'adresse URL en provenance du terminal T2.

La figure 3E illustre une interface graphique 32 du terminal T1 illustrant le résultat de l'étape 209. L'interface graphique 32 correspond à une interface graphique du navigateur web du terminal T1. L'interface graphique 32 comprend un cadre 315 comprenant l'adresse URL de la page web 320 affichée par le navigateur web du terminal T1. Dans l'exemple décrit ici, l'adresse URL est l'adresse URL générée lors de l'étape 203.

La page web 320 affiche un message d'attente à l'utilisateur du terminal T1 lui indiquant que la session de communication WebRTC est initiée et que le navigateur web du terminal T1 est en attente d'une réponse du terminal T2.

Selon un mode particulier de réalisation de l'invention, suite à la réception par le serveur SERV de la demande de communication envoyée par le terminal T1 à l'étape 209, le serveur SERV mesure le temps écoulé depuis la réception de la demande de communication. Après un temps écoulé prédéterminé, par exemple 1 ou 2 minutes, si le terminal T2 n'a pas demandé au serveur SERV un accès à la page web pointée par l'adresse URL reçue en provenance du terminal T1, le serveur SERV envoie au terminal T1 une notification d'expiration de session. Une telle notification peut être une page web affichant un message indiquant que la session de communication demandée a expiré.

Selon un autre mode particulier de réalisation de l'invention, lorsque le navigateur web du terminal T2 envoie au serveur SERV une requête d'accès à la page web pointée par l'adresse URL reçue depuis le terminal T1 via une requête HTTP, le serveur SERV vérifie si le navigateur web du terminal T2 est compatible avec la technologie WebRTC. Pour cela, le serveur SERV vérifie des paramètres du navigateur web compris dans la requête d'accès HTTP transmise par le navigateur web du terminal T2.

Si le navigateur web du terminal T2 n'est pas compatible avec la technologie WebRTC, le serveur SERV envoie au terminal T1 une page web comprenant un message d'erreur indiquant que le terminal T2 n'est pas compatible pour établir une communication WebRTC. Le serveur SERV rejette la requête envoyée par le navigateur du terminal T2 et envoie au terminal T2 une page web comprenant un message d'erreur indiquant que le navigateur web du terminal T2 n'est pas compatible avec la technologie WebRTC. Lorsque le navigateur web du terminal T2 est compatible avec la technologie WebRTC, le serveur SERV envoie au terminal T2 une page web permettant au navigateur web du terminal T2 d'établir la communication avec le navigateur web du terminal T1. Dans ce cas, la communication WebRTC est établie de manière connue entre le navigateur web du terminal T1 et le navigateur web du terminal T2, via le serveur SERV et le réseau INT.

L'invention a été décrite dans le cas de communications établies entre deux terminaux : T1 et T2. Le procédé selon l'invention s'applique également au cas des communications de groupe selon la technologie WebRTC. Par exemple, l'utilisateur peut initier une communication WebRTC depuis un fil de discussions entre plusieurs contacts. Selon un autre exemple, l'utilisateur peut initier une communication WebRTC depuis une fiche contact relative à un groupe et comprenant un identifiant pour chaque contact du groupe. Selon le mode particulier de réalisation des communications de groupe, le champ destinataire du message comprenant l'URL générée comprend un identifiant de chaque contact du groupe (obtenu à partir de la fiche contact du groupe ou du fil de discussion) et le message est envoyé à chaque contact. Ainsi, chaque utilisateur d'un terminal recevant le message peut cliquer sur le lien URL compris dans le message reçu. La communication WebRTC est établie dès qu'un navigateur d'un terminal autre que le terminal T1 accède à la page web pointée par l'URL. Les autres terminaux peuvet ensuite se joindre à la communication de groupe en accèdant à la page web pointée par l'URL.

Dans les modes de réalisation de l'invention qui viennent d'être décrits, le procédé d'établissement d'une communication WebRTC est mis en oeuvre par un dispositif 4. Un tel dispositif 4 dispose de l'architecture matérielle d'un ordinateur, telle qu'illustrée schématiquement à la figure 4.

Ainsi, le dispositif 4 comporte notamment un processeur 40, une mémoire morte 42, une mémoire vive 41 et des moyens de communication 43.

Le dispositif 4 comporte également un module d'interaction utilisateur 44 adapté pour détecter des interactions d'un utilisateur avec le dispositif 4. Un tel module d'interaction utilisateur 44 peut être tout moyen permettant à un utilisateur d'interagir sur le terminal T1, tel qu'un écran tactile du dispositif 4, une souris, un clavier, un logiciel de reconnaissance vocale, ...

La mémoire morte 42 du dispositif 4 constitue un support d'enregistrement lisible par le processeur 40 et sur lequel est enregistré un programme d'ordinateur conforme à l'invention, comportant des instructions pour l'exécution des étapes d'un procédé d'établissement d'une communication WebRTC conforme à l'invention, les étapes de ce procédé d'établissement d'une communication WebRTC étant décrites en référence aux figures 2 et 3A-3E, dans des modes particuliers de réalisation de l'invention.

Ce programme d'ordinateur définit de façon équivalente des modules fonctionnels du dispositif 4, tels que notamment :
- un module LOGI adapté pour créer un identifiant de session comprenant au moins un identifiant du premier terminal, générer une adresse URL comprenant ledit identifiant de session créé, insérer ladite adresse URL dans un message destiné à un deuxième terminal,
- un module d'envoi ENV du message à destination du deuxième terminal,
- un module NAV correspondant à un navigateur web du dispositif.

Les moyens de communications 43 correspondent à un module de communication permettant au dispositif 4 de communiquer avec d'autres terminaux via le réseau MOB ou le réseau INT.

Le module d'envoi ENV utilise notamment le module de communication 43 pour transmettre un message au deuxième terminal.

Le module NAV de navigateur web utilise notamment le module de communication 43 pour transmettre des requêtes d'accès à des pages web fournies par le serveur SERV, pour recevoir depuis le serveur SERV de telles pages web et pour communiquer avec le deuxième terminal lorsqu'une communication webRTC est établie avec le navigateur web du deuxième terminal.

Le module d'interaction utilisateur 44 communique avec le module logiciel LOGI pour déclencher l'exécution des étapes de création d'un identifiant de session comprenant au moins un identifiant du premier terminal, de génération d'une adresse URL comprenant ledit identifiant de session créé, et d'insertion ladite adresse URL dans un message destiné à un deuxième terminal.

Le module d'envoi ENV communique avec le module NAV de navigateur web afin de déclencher l'ouverture de la page web téléchargée depuis le serveur grâce à ladite adresse URL générée suit eà l'envoi du message au deuxième terminal.

Selon un mode particulier de réalisation de l'invention, le module logiciel LOGI communique avec un espace mémoire du dispositif pour obtenir un identifiant du dispositif. Les fonctions de ces modules sont décrites plus en détail en référence aux étapes du procédé d'établissement d'une communication WebRTC aux figures 2 et 3A-3E.

Le dispositif 4 peut être compris dans un terminal, tel qu'un téléphone mobile, un ordinateur, une tablette, etc...

## Revendications

1. Procédé pour établir une communication dite communication web entre un navigateur web (NAV) exécuté sur un premier terminal (T1) et un navigateur web exécuté sur un deuxième terminal (T2), **caractérisé en ce qu'**il comprend une étape de détection (200) par le premier terminal d'une interaction utilisateur demandant l'établissement d'une communication web avec le deuxième terminal, une communication selon un mode de communication distinct d'une communication via un navigateur web étant préalablement établie entre le premier terminal et le deuxième terminal, la détection de l'interaction utilisateur déclenchant :
- une étape de création (202) d'un identifiant de session comprenant au moins un identifiant du premier terminal,
- une étape de génération (203) d'une adresse URL comprenant ledit identifiant de session créé, ladite adresse URL permettant d'accéder à une page web d'un serveur pour établir la communication web demandée,
- une étape d'insertion (205) de ladite adresse URL dans un message destiné au deuxième terminal,
- une étape d'envoi (206) du message à destination du deuxième terminal déclenchant l'ouverture (209) par le navigateur web du premier terminal de ladite page web téléchargée depuis le serveur à partir de ladite adresse URL.

2. Procédé selon la revendication 1, dans lequel la communication préalablement établie entre le premier terminal et le deuxième terminal selon un mode de communication distinct d'une communication web est une communication par messages textuels mise en oeuvre par une application de communication par messages textuels.

3. Procédé selon l'une des revendications 1 à 2, dans lequel un bouton d'action est affiché en association avec une information relative à la communication préalablement établie entre le premier terminal et le deuxième terminal.

4. Procédé selon la revendication 2, dans lequel le message comprenant l'adresse URL est affiché dans un cadre de composition de texte d'une interface graphique de l'application de communication par messages textuels.

5. Procédé selon l'une quelconque des revendications 2 à 4, dans lequel après l'envoi du message comprenant l'adresse URL, ledit message est sauvegardé par le premier terminal avec les messages échangés entre le premier terminal et le deuxième terminal via l'application de communication par messages textuels.

6. Procédé selon l'une quelconque des revendications 1 à 5, dans lequel l'envoi du message déclenche, préalablement à l'ouverture de la page web, l'exécution d'une occurrence du navigateur web du premier terminal.

7. Procédé selon l'une quelconque des revendications 1 à 6, comprenant après un temps prédéterminé depuis l'envoi du message et lorsque la communication web n'est pas établie avec le deuxième terminal, une étape de réception par le premier terminal d'une notification d'expiration de session envoyée par le serveur.

8. Procédé selon l'une quelconque des revendications 1 à 7, comprenant une étape de réception par le premier terminal d'une page web envoyée par le serveur, ladite page web indiquant que le deuxième terminal n'a pas pu établir la communication web demandée.

9. Dispositif pour établir une communication dite communication web entre un navigateur web exécuté sur un premier terminal et un navigateur web exécuté sur un deuxième terminal, **caractérisé en ce que**, une communication selon un mode de communication distinct d'une communication via un navigateur web étant préalablement établie entre le premier terminal et le deuxième terminal, il comprend :
- un module de détection d'une interaction utilisateur demandant l'établissement d'une communication web avec le deuxième terminal,
- un module de création d'un identifiant de session comprenant au moins un identifiant du premier terminal,
- un module de génération d'une adresse URL comprenant ledit identifiant de session créé, ladite adresse URL permettant d'accéder à une page web d'un serveur pour établir la communication web demandée,
- un module d'insertion de ladite adresse URL dans un message destiné au deuxième terminal
- un module d'envoi du message à destination du deuxième terminal, adapté à déclencher par le navigateur web du premier terminal l'ouverture de ladite page web téléchargée depuis le serveur à partir de ladite adresse URL.

10. Terminal comprenant un dispositif selon la revendication 9.

11. Programme d'ordinateur comportant des instructions de code de programme pour l'exécution des étapes du procédé d'établissement d'une communication selon l'une quelconque des revendications 1 à 8.

## Patentansprüche

1. Verfahren zum Aufbauen einer Kommunikation, Webkommunikation genannt, zwischen einem Webbrowser (NAV), der auf einem ersten Endgerät (T1) ausgeführt wird, und einem Webbrowser, der auf einem zweiten Endgerät (T2) ausgeführt wird, **dadurch gekennzeichnet, dass** es einen Schritt der Detektion (200) einer Benutzerinteraktion, die den Aufbau einer Webkommunikation mit dem zweiten Endgerät anfordert, durch das erste Endgerät umfasst, wobei zuvor eine Kommunikation gemäß einem Kommunikationsmodus, der von einer Kommunikation über einen Webbrowser verschieden ist, zwischen dem ersten Endgerät und dem zweiten Endgerät aufgebaut wurde, wobei die Detektion der Benutzerinteraktion auslöst:
- einen Schritt der Erzeugung (202) einer Sitzungskennung, die wenigstens eine Kennung des ersten Endgerätes umfasst,
- einen Schritt der Erzeugung (203) einer URL-Adresse, welche die erzeugte Sitzungskennung umfasst, wobei die URL-Adresse ermöglicht, auf eine Webseite eines Servers zuzugreifen, um die angeforderte Webkommunikation aufzubauen,
- einen Schritt der Einfügung (205) der URL-Adresse in eine Nachricht, die für das zweite Endgerät bestimmt ist,
- einen Schritt des Sendens (206) der Nachricht an das zweite Endgerät, was das Öffnen (209), durch den Webbrowser des ersten Endgerätes, der Webseite auslöst, die ausgehend von der URL-Adresse vom Server heruntergeladen wurde.

2. Verfahren nach Anspruch 1, wobei die zuvor zwischen dem ersten Endgerät und dem zweiten Endgerät aufgebaute Kommunikation gemäß einem Kommunikationsmodus, der von einer Webkommunikation verschieden ist, eine Kommunikation über Textnachrichten ist, die von einer Anwendung zur Kommunikation über Textnachrichten durchgeführt wird.

3. Verfahren nach einem der Ansprüche 1 bis 2, wobei eine Aktionstaste in Verbindung mit einer Information angezeigt wird, die sich auf die zuvor aufgebaute Kommunikation zwischen dem ersten Endgerät und dem zweiten Endgerät bezieht.

4. Verfahren nach Anspruch 2, wobei die Nachricht, welche die URL-Adresse umfasst, in einem Rahmen zur Texterstellung einer grafischen Schnittstelle der Anwendung zur Kommunikation über Textnachrichten angezeigt wird.

5. Verfahren nach einem der Ansprüche 2 bis 4, wobei nach dem Senden der Nachricht, welche die URL-Adresse umfasst, diese Nachricht durch das erste Endgerät mit den Nachrichten gespeichert wird, die zwischen dem ersten Endgerät und dem zweiten Endgerät über die Anwendung zur Kommunikation über Textnachrichten ausgetauscht werden.

6. Verfahren nach einem der Ansprüche 1 bis 5, wobei das Senden der Nachricht vor dem Öffnen der Webseite die Ausführung einer Instanz des Webbrowsers des ersten Endgerätes auslöst.

7. Verfahren nach einem der Ansprüche 1 bis 6, welches nach einer vorbestimmten Zeit seit dem Senden der Nachricht, und wenn die Webkommunikation mit dem zweiten Endgerät nicht aufgebaut ist, einen Schritt des Empfangs, durch das erste Endgerät, einer von dem Server gesendeten Benachrichtigung über den Ablauf der Sitzung umfasst.

8. Verfahren nach einem der Ansprüche 1 bis 7, welches einen Schritt des Empfangs, durch das erste Endgerät, einer von dem Server gesendeten Webseite umfasst, wobei diese Webseite anzeigt, dass das zweite Endgerät die angeforderte Webkommunikation nicht aufbauen konnte.

9. Vorrichtung zum Aufbauen einer Kommunikation, Webkommunikation genannt, zwischen einem Webbrowser, der auf einem ersten Endgerät ausgeführt wird, und einem Webbrowser, der auf einem zweiten Endgerät ausgeführt wird, **dadurch gekennzeichnet, dass** sie, nachdem zuvor eine Kommunikation gemäß einem Kommunikationsmodus, der von einer Kommunikation über einen Webbrowser verschieden ist, zwischen dem ersten Endgerät und dem zweiten Endgerät aufgebaut wurde, umfasst:
- ein Modul zur Detektion einer Benutzerinteraktion, die den Aufbau einer Webkommunikation mit dem zweiten Endgerät anfordert,
- ein Modul zur Erzeugung einer Sitzungskennung, die wenigstens eine Kennung des ersten Endgerätes umfasst,
- ein Modul zur Erzeugung einer URL-Adresse, welche die erzeugte Sitzungskennung umfasst, wobei die URL-Adresse ermöglicht, auf eine Webseite eines Servers zuzugreifen, um die angeforderte Webkommunikation aufzubauen,
- ein Modul zur Einfügung der URL-Adresse in eine Nachricht, die für das zweite Endgerät bestimmt ist,
- ein Modul zum Senden der Nachricht an das zweite Endgerät, das dafür ausgelegt ist, durch den Webbrowser des ersten Endgerätes das Öffnen der Webseite auszulösen, die ausgehend von der URL-Adresse vom Server heruntergeladen wurde.

10. Endgerät, welches eine Vorrichtung nach Anspruch 9 umfasst.

11. Computerprogramm, welches Programmcodeanweisungen zur Ausführung der Schritte des Verfahrens zum Aufbau einer Kommunikation nach einem der Ansprüche 1 bis 8 umfasst.

## Claims

1. Method for establishing a communication called web communication between a web browser (NAV) running on a first terminal (T1) and a web browser running on a second terminal (T2), **characterized in that** said method comprises a step of detection (200), by the first terminal, of a user interaction requesting the establishment of a web communication with the second terminal, a communication according to a communication mode distinct from a communication via a web browser being previously established between the first terminal and the second terminal, the detection of the user interaction triggering:
- a step of creation (202) of a session identifier comprising at least one identifier of the first terminal,
- a step of generation (203) of a URL address comprising said created session identifier, said URL address making it possible to access a web page of a server to establish the requested web communication,
- a step of insertion (205) of said URL address into a message intended for the second terminal,
- a step of sending (206) of the message to the second terminal triggering the opening (209) by the web browser of the first terminal of said web page downloaded from the server based on said URL address.

2. Method according to Claim 1, in which the communication previously established between the first terminal and the second terminal according to a communication mode distinct from a web communication is a communication by text messages implemented by a text message communication application.

3. Method according to one of Claims 1 or 2, in which an action button is displayed in association with information relating to the communication previously established between the first terminal and the second terminal.

4. Method according to Claim 2, in which the message comprising the URL address is displayed in a text composition box of a graphical interface of the text message communication application.

5. Method according to any one of Claims 2 to 4, in which, after the sending of the message comprising the URL address, said message is saved by the first terminal with the messages exchanged between the first terminal and the second terminal via the text message communication application.

6. Method according to any one of Claims 1 to 5, in which the sending of the message triggers, prior to the opening of the web page, the running of an occurrence of the web browser of the first terminal.

7. Method according to any one of Claims 1 to 6, comprising, after a predetermined time since the sending of the message and when the web communication is not established with the second terminal, a step of reception by the first terminal of a session expiration notification sent by the server.

8. Method according to any one of Claims 1 to 7, comprising a step of reception, by the first terminal, of a web page sent by the server, said web page indicating that the second terminal has not been able to establish the requested web communication.

9. Device for establishing a communication called web communication between a web browser running on a first terminal and a web browser running on a second terminal, **characterized in that**, a communication according to a communication mode distinct from a communication via a web browser being previously established between the first terminal and the second terminal, said device comprises:
- a module for detecting a user interaction requesting the establishment of a web communication with the second terminal,
- a module for creating a session identifier comprising at least one identifier of the first terminal,
- a module for generating a URL address comprising said created session identifier, said URL address making it possible to access a web page of a server to establish the requested web communication,
- a module for inserting said URL address into a message intended for the second terminal,
- a module for sending the message to the second terminal, suitable for triggering, by the web browser of the first terminal, the opening of said web page downloaded from the server based on said URL address.

10. Terminal comprising a device according to Claim 9.

11. Computer program comprising program code instructions for executing the steps of the method for establishing a communication according to any one of Claims 1 to 8.
